# EUROPÄISCHE PATENTSCHRIFT

(11) **EP 0 526 828 B1**
(45) Veröffentlichungstag und Bekanntmachung des Hinweises auf die Patenterteilung: **29.03.1995**
(21) Anmeldenummer: 92112891.4
(22) Anmeldetag: 29.07.1992
(51) Int. Cl.: B60K 23/04

(54) **Gleichlaufvorrichtung für eine Antriebsachse**
Device for synchronising speeds of driven axles
Dispositif de synchronisation pour essieux moteurs

(30) Priorität: 03.08.1991 DE 9109630 U
(43) Veröffentlichungstag der Anmeldung: 10.02.1993
(73) Patentinhaber: SLIFT HEBEZEUG GMBH, D-75233 Tiefenbronn (DE)
(72) Erfinder: Sommerer, Frank E., W-7533 Tiefenbronn (DE)
(74) Vertreter: Schmid, Berthold, Dipl.-Ing.

(56) Entgegenhaltungen:
- EP-A- 0 267 419
- DE-A- 3 912 491
- DE-U- 9 006 739
- DE-U- 9 109 630
- US-A- 3 320 829

## Beschreibung

Die vorliegende Erfindung betrifft eine Gleichlaufvorrichtung für eine Antriebsachse, die mindestens zwei Antriebsräder und eine bei der Kurvenfahrt die ungleiche Wegstrecke dieser Antriebsräder ausgleichende Einrichtung aufweist.

Bei einem Fahrzeug mit einer zwei Antriebsräder aufweisenden Antriebsachse kommt es bei schwierigen Bodenverhältnissen oder auch bei Glatteis immer wieder vor, daß das eine Antriebsrad seinen normalen Vorlauf fortsetzt, das andere Antriebsrad dagegen infolge der bestehenden Bodenverhältnisse schneller umlauft oder sogar durchdreht. Die Aufgabe der vorliegenden Erfindung ist es somit, eine Gleichlaufvorrichtung zu schaffen, mit der das rascher umlaufende oder sogar durchdrehende Antriebsrad soweit abgebremst wird, bis die Drehzahl der beiden Antriebsräder wieder die gleiche ist.

Erfindungsgemäß wird diese Aufgabe nun dadurch gelöst, daß jedes der Antriebsräder drehfest mit dem Förderorgan einer jeweils in einem eigenen Leitungssystem liegenden Hydraulikpumpe verbunden und diesen den Antriebsrädern zugeordneten Hydraulikpumpen ein gemeinsamer, mit allen Leitungssystemen verbundener Steuerzylinder zugeordnet ist, in dem ein die Zufluß- oder Abflußquerschnitte des Zylinders regelnder, aus mehreren auf einer gemeinsamen Kolbenstange angeordneten Teilkolben bestehender Mehrfachkolben längsverschiebbar gelagert ist. Dreht bei einer, beispielsweise zwei Antriebsräder aufweisenden Antriebsachse das eine Antriebsrad durch, so läuft auch die diesem Antriebsrad zugeordnete Hydraulikpumpe schneller um, was einen Druckanstieg des in dem dieser Hydraulikpumpe zugeordneten Leitungssystem zur Folge hat. Dieser Druckanstieg bewirkt eine Langsverschiebung des in dem Steuerzylinder befindlichen Mehrfachkolbens, wodurch die Zufluß- und Abflußquerschnitte im Leitungssystem dieser rascher umlaufenden Hydraulikpumpe verringert oder sogar vollständig geschlossen werden. Der hierbei eintretende Pumpwiderstand hat einen langsameren Umlauf des Förderorganes der Hydraulikpumpe und damit auch ein Abbremsen dem durchdrehenden Antriebsrades zur Folge. Gleichzeitig mit der Verschiebung des Mehrfachkolbens in dem Steuerzylinder werden aber auch die Zufluß- und Abflußquerschnitte des dem anderen Antriebsrad und der anderen Hydraulikpumpe zugeordneten Leitungssystemes weiter geoffnet, so daß gleichzeitig auch der Pumpwiderstand der anderen Hydraulikpumpe verringert und somit ein rascherer Umlauf des anderen Antriebsrades möglich ist.

Bei einer besonders zweckmäßigen Ausführungsform dieser erfindungsgemäßen Gleichlaufvorrichtung weist dieser Mehrfachzylinder für jedes Leitungssystem jeweils eine Arbeitskammer und eine Durchflußkammer auf, wobei dann diese einander benachbarten Kammern des Steuerzylinders jeweils durch einen Teilkolben des Mehrfachkolbens voneinander getrennt sind. Der Zufluß zu den Durchflußkammern kann dabei durch eine kleinere Bemessung der Zuflußquerschnitte reduziert werden. Es ist aber auch möglich, daß vor der Zuflußöffnung jeder Durchflußkammer eine den Durchfluß des Druckmittels reduzierende Einrichtung, insbesondere eine Drossel od.dgl., angeordnet ist.

Handelt es sich um eine Antriebsachse mit zwei Antriebsrädern, so weist diese Antriebsachse zweckdienlich zwei drehfest mit den Antriebsradern verbundene Hydraulikpumpen sowie auch zwei zugehörige Leitungssysteme auf, denen dann ein gemeinsamer Steuerzylinder mit einem Drillingskolben zugeordnet ist, der mit zwei außeren Arbeitskolben und einem die einander benachbarten Durchflußkammern voneinander trennenden Mittelkolben ausgestattet ist.

Weitere Einzelheiten der vorliegenden Erfindung ergeben sich aus der folgenden Beschreibung einer auf der Zeichnung dargestellten beispielsweisen Ausführungsform sowie den sich hieran anschließenden Ansprüchen.

Es zeigen:
- Fig. 1: eine schematische Darstellung der Gleichlaufvorrichtung in ihrer Gleichlaufstellung und
- Fig. 2: eine der Fig. 1 entsprechenden Darstellung, bei der das linke Antriebsrad dem rechten Antriebsrad gegenüber voreilt.

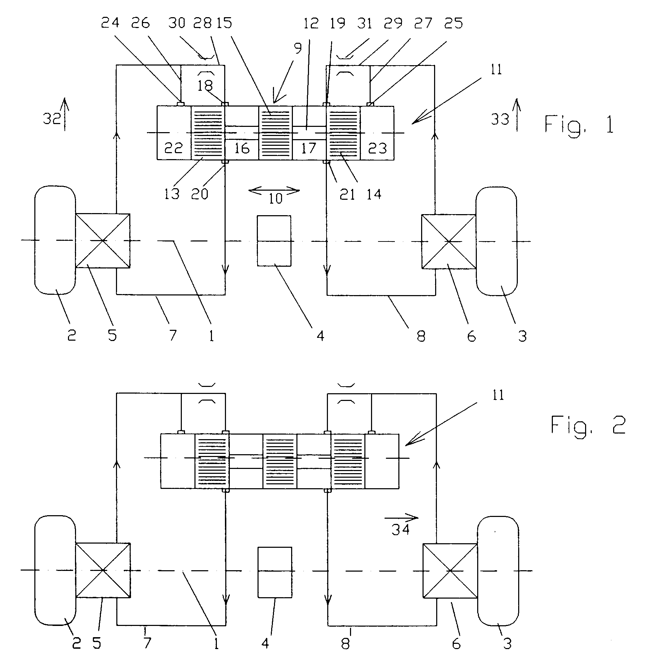

In der Fig. 1 ist in schematischer Weise eine Antriebsachse 1 mit den beiderseits befindlichen Antriebsrädern 2 und 3 dargestellt. Um bei dem Befahren von Kurven die unterschiedlichen Wegstrecken der beiden Antriebsräder 2 und 3 auszugleichen, ist zudem noch ein ebenfalls nur schematisch dargestelltes Differenzialgetriebe 4 vorgesehen.

Wie weiter aus dieser Fig. 1 ersichtlich, so ist jedem der beiden Antriebsräder 2 und 3 jeweils eine mit 5 bzw. 6 bezeichnete Hydraulikpumpe zugeordnet, deren nicht besonders dargestelltes Förderorgan drehfest mit dem zugehörigen Antribesrad 2 bzw. 3 verbunden ist. Jede der beiden Hydraulikpumpen 5 und 6 liegt dabei in einem eigenen, in sich geschlossenen Leitungssystem 7 bzw. 8. Ferner gehört zu diesen beiden Leitungssystemen 7 und 8 auch noch ein gemeinsamer, mit 9 bezeichneter Steuerzylinder, in dem längsverschiebbar in Richtung des Doppelpfeiles 10 ein Drillingskolben 11 gelagert ist.

Auf der Kolbenstange 12 dieses Drillingskolbens 11 sind dabei zwei äußere Arbeitskolben 13 und 14 und zwischen diesen ein Mittelkolben 15 befestigt. Zwischen den beiden Arbeitskolben 13 und 14 und diesem Mittelkolben 15 befindet sich jeweils eine mit 16 bzw. 17 bezeichnete Durchflußkammer, die über die Zuflüsse 18 und 19 und über die Abflüsse 20 und 21 mit den Leitungssystemen 7 bzw. 8 in Verbindung stehen. Die beiden außen liegenden Räume des Steuerzylinders 9 bilden jeweils eine mit 22 bzw. 23 bezeichnete Arbeitskammer, die über die Zuflüsse 24 und 25 und zugehörige Stichleitungen 26 bzw. 27 ebenfalls mit den Leitungssystemen 7 und 8 verbunden sind. Schließlich sind in den zwischen diesen Stichleitungen 26 und 27 und den beiden Zuflüssen 18 und 19 befindlichen Leitungen 28 und 29 nach mit 30 und 31 bezeichnete Drosseln angeordnet, die den Zufluß des Druckmediums zu den beiden Durchflußkammern 16 und 17 hemmen und damit jeweils zwischen den beiden Arbeitskammern 22 und 23 und den zu diesen gehörigen Durchflußkammern 16 und 17 eine Druckdifferenz bewirken.

Die Wirkungsweise dieser Vorrichtung ist die folgende:
Ist die Drehzahl beider Antriebsräder 2 und 3 gleich, so nimmt der Drillingskolben 11 seine in der Fig. 1 dargestellte Mittelstellung ein, in der sowohl die Zuflüsse 18 und 19 als auch die Abflüsse 20 und 21 jeweils zur Hälfte durch die Arbeitskolben 13 bzw. 14 abgedeckt sind. Das von den beiden Hydraulikpumpen 5 und 6 geforderte Druckmedium fließt somit in Richtung der Pfeile 32 und 33 durch die zugehörigen Leitungssysteme 7 bzw. 8, wobei das eine Druckmedium über den Zufluß 18 und den Abfluß 20 durch die Kammer 16 und das andere Druckmedium über den Zufluß 19 und den Abfluß 21 durch die andere Kammer 17 gleichmäßig hindurchströmen.

Tritt infolge der ungleichen Bodenbeschaffenheit oder aber auch Glattels nun der Fall ein, daß das linke Antriebsrad 2 mit einer größeren Drehzahl als das rechte Antriebsrad 3 umlauft oder sogar durchdreht, so bewirkt die zugehörige Hydraulikpumpe 5 einen Druckanstieg des in diesem Leitungssystem 7 umlaufenden Druckmediums. Infolge dieses dann in der zugehörigen Arbeitskammer 22 herrschenden Überdruckes gegenüber dem in der anderen Arbeitskammer 23 herrschenden Normaldruck wird der Drillingskolben 11 in Richtung des Pfeiles 34 geringfügig verschoben. Diese Verschiebung hat dabei zur Folge, daß der dem linken Leitungssystem 7 zugeordnete Arbeitskolben 13 sowohl den Zufluß 18 der zugehörigen Durchflußkammer 16 als auch deren Abfluß 20 teilweise oder vollständig absperrt, der andere Arbeitskolben 14 dagegen den der Durchflußkammer 17 zugeordneten Zufluß 19 und den zugehorigen Abfluß 21 teilweise oder vollständig öffnet. Da die Hydraulikpumpe 5 jetzt einen größeren Druckwiderstand überwinden muß, wird gleichzeitig das Antriebsrad 2 starker abgebremst, die Hydraulikpumpe 6 dagegen braucht nur noch einen geringeren Druckwiderstand überwinden, so daß ihr Förderorgan nur noch eine geringere Leistung zu erbringen hat, was einen rascheren Umlauf des Antriebsrades 3 zur Folge hat.

Sobald die Drehzahl beider Antriebsräder 2 und 3 wieder gleich groß ist, herrscht in den beiden Leitungssystemen 7 und 8 wiederum der gleiche Druck, was eine Rückstellung des Drillingskolbens 11 in seine in der Fig. 1 dargestellte Mittellage zur Folge hat. Die jeweilige Leistung der beiden Hydraulikpumpen 5 und 6 sowie die Bemessung der Zuflüsse 18/19 und 20/21 können dabei den jeweiligen Verhältnissen so angepaßt werden, daß die Steuerung des Drillingskolbens 11 und damit auch der Ausgleich der unterschiedlichen Umläufe beider Antriebsräder 2 und 3 möglichst weich erfolgt.

Schließlich ist es auch ohne weiteres möglich, an die beiden Leitungssysteme 7 und 8 noch jeweils einen nicht besonders dargestellten Bremszylinder anzuschließen, über den dann eine das betreffende Antriebsrad 2/3 abbremsende Bremse angesteuert wird.

## Patentansprüche

1. Gleichlaufvorrichtung für eine mindestens zwei Antriebsräder (2, 3) und eine bei der Kurvenfahrt die ungleiche Wegstrecke der Antriebsräder (2, 3) ausgleichende Einrichtung (4) aufweisende Antriebsachse (1), dadurch gekennzeichnet, daß jedes der Antriebsräder (2, 3) drehfest mit dem Förderorgan einer jeweils in einem eigenen Leitungssystem (7, 8) liegenden Hydraulikpumpe (5, 6) verbunden und den Hydraulikpumpen (5, 6) ein gemeinsamer, mit allen Leitungssystemen (7, 8) verbundener Steuerzylinder (9) zugeordnet ist, in dem ein die Zufluß- und Abflußquerschnitte (18 bis 21) des Zylinders (9) regelnder, aus mehreren auf einer gemeinsamen Kolbenstange (12) angeordneten Teilkolben (13, 14, 15) bestehender Mehrfachkolben (11) längsverschiebbar gelagert ist.

2. Gleichlaufvorrichtung nach Anspruch 1, dadurch gekennzeichnet, daß der Zylinder (9) für jedes Leitungssystem (7, 8) jeweils eine Arbeitskammer (22, 23) und eine Durchflußkammer (16, 17) aufweist, wobei diese einander benachbarten Kammern (16, 17) des Steuerzylinders (9) jeweils durch einen Teilkolben (15) des Mehrfachkolbens (11) voneinander getrennt sind.

3. Gleichlaufvorrichtung nach Anspruch 1 und/oder 2, dadurch gekennzeichnet, daß vor der Zuflußöffnung (18, 19) jeder Durchflußkammer (16, 17) eine den Durchfluß des Druckmittels reduzierende Einrichtung, insbesondere eine Drossel (30, 31) od.dgl., angeordnet ist.

4. Gleichlaufvorrichtung nach einem oder mehreren der Ansprüche 1 bis 3, dadurch gekennzeichnet, daß die Antriebsachse (1) zwei Antriebsräder (2, 3), zwei drehfest mit diesen verbundene Hydraulikpumpen (5, 6) sowie zwei zugehörige Leitungssysteme (7, 8) aufweist, denen ein gemeinsamer Steuerzylinder (9) mit einem Drillingskolben (11) zugeordnet ist, der zwei äußere Arbeitskolben (13, 14) und einen die einander benachbarten Durchflußkammern (16, 17) voneinander trennenden Mittelkolben (15) aufweist.

5. Gleichlaufvorrichtung nach einem oder mehreren der Ansprüche 1 bis 4, dadurch gekennzeichnet, daß in jedem der Leitungssysteme (7, 8) jeweils ein auf eine Bremse einwirkender hydraulischer Bremszylinder liegt.

## Claims

1. Synchronisation device for a drive axis (1) comprising at least two drive wheels (2, 3) and a device (4) for synchronising the uneven travel distance of the drive wheels (2, 3) when going round corners, characterised in that each of the drive wheels (2, 3) is connected in a manner secure against rotation to the supply member of a hydraulic pump (5, 6) which is located in its own pipeline system (7, 8) in each case and a common control cylinder (9), which is connected to all the pipeline systems (7, 8) and is associated with the hydraulic pump (5, 6), in that a multiple piston (11), which comprises a plurality of part pistons (13, 14, 15) disposed on a common piston rod (12) and controlling the inflow and outflow cross-sections (18 to 21) of the cylinder (9) is mounted in a longitudinally displaceable manner.

2. Synchronisation device according to Claim 1, characterised in that the cylinder (9) comprises, for each pipeline system (7, 8), an operating chamber (22, 23), and a throughflow chamber (16, 17) in each case, wherein these chambers (16, 17) of the control cylinder (9), which chambers are adjacent one another, are separated from one another by a part piston (15) of the multiple piston (11) in each case.

3. Synchronisation device according to Claim 1 and/or 2, characterised in that, in front of the inflow aperture (18, 19) of each throughflow chamber (16, 17) there is disposed a device for reducing the throughflow of the pressure medium, in particular a throttle (30, 31) or the like.

4. Synchronisation device according to one or more of Claims 1 to 3, characterised in that the drive axis (1) comprises two drive wheels (2, 3), two hydraulic pumps (5, 6) connected thereto in a manner secure against rotation and two associated pipeline systems (7, 8) with which there is associated a common control cylinder (9) with a triple piston (11), which comprises two external working pistons (13, 14) and a central piston (15) separating the adjacent throughflow chambers (16, 17), which are adjacent one another, from one another.

5. Synchronisation device according to one or more of Claims 1 to 4, characterised in that there is located, in each of the pipeline systems (7, 8), a hydraulic braking system acting on a brake in each case.

## Revendications

1. Dispositif de synchronisation pour un essieu moteur (1) présentant au moins deux roues motrices (2, 3) et un mécanisme (4) compensant les distances différentes parcourues par les roues motrices (2, 3) dans les virages, **caractérisé** en ce que chacune des roues motrices (2, 3) est reliée en solidarité de rotation à l'organe de refoulement d'une pompe hydraulique respective (5, 6) se trouvant dans un propre circuit hydraulique (7, 8), et un cylindre de commande commun (9), relié à tous les circuits hydrauliques (7, 8), est associé aux pompes hydrauliques (5, 6), cylindre dans lequel est monté à déplacement longitudinal un piston multiple (11), qui règle les sections d'admission et d'évacuation (18 à 21) du cylindre (9) et qui est constitué de plusieurs pistons partiels (13, 14, 15) disposés sur une tige de piston commune (12).

2. Dispositif de synchronisation selon la revendication 1, **caractérisé** en ce que le cylindre (9) présente une chambre de travail respective (22, 23) et une chambre d'écoulement respective (16, 17) pour chaque circuit hydraulique (7, 8), ces chambres mutuellement voisines (16, 17) du cylindre de commande (9) étant chaque fois séparées entre elles par un piston partiel (15) du piston multiple (11).

3. Dispositif de synchronisation selon la revendication 1 et/ou 2, **caractérisé** en ce qu'un moyen réduisant l'écoulement du fluide hydraulique, notamment un étranglement (30, 31) ou similaire, est disposé avant l'ouverture d'admission (18, 19) de chaque chambre d'écoulement (16, 17).

4. Dispositif de synchronisation selon une ou plusieurs des revendications 1 à 3, **caractérisé** en ce que l'essieu moteur (1) présente deux roues motrices (2, 3), deux pompes hydrauliques (5, 6) reliées en solidarité de rotation à ces roues, ainsi que deux circuits hydrauliques correspondants (7, 8), auxquels est associé un cylindre de commande commun (9) pourvu d'un piston triple (11), présentant deux pistons de travail extérieurs (13, 14) et un piston central (15) qui sépare l'une de l'autre les chambres d'écoulement mutuellement voisines (16, 17).

5. Dispositif de synchronisation selon une ou plusieurs des revendications 1 à 4, **caractérisé** en ce qu'un cylindre de frein hydraulique agissant sur un frein se trouve dans chacun des circuits hydrauliques (7, 8).
